# EUROPEAN PATENT APPLICATION

(11) **EP 4 742 516 A1**
(43) Date of publication of application: **13.05.2026**
(21) Application number: 24836207.1
(22) Date of filing: 07.06.2024
(51) Int. Cl.: H02K 29/03, H02K 29/10, H02K 11/22, H02K 3/28, H02K 11/01, H02K 21/16, G01D 5/245, H02P 6/10

(54) **DC MOTOR HAVING MULTI-PHASE ARMATURE WINDING COIL WIRED TO STATOR IN INDEPENDENT AND PARALLEL MANNER, ROTOR HAVING MULTIPLE PERMANENT MAGNETS, AND COIL WOUND IN PARALLEL ACCORDING TO POLE OF ROTOR**

(30) Priority: 04.07.2023 KR 20230086479
(71) Applicant: Kang, Ki Cheol, Changwon-si, Gyeongsangnam-do 51123 (KR); Park, Sung Chul, Gyeongsangnam-do 52057 (KR)
(72) Inventor: KANG, Ki Cheol, Changwon-si, Gyeongsangnam-do 51123 (KR)
(74) Representative: Cabinet Chaillot
(86) International application number: PCT/KR2024/007782
(87) International publication number: WO 2025/009758

(57) **Abstract**

The present invention relates to a DC motor having a multi-phase armature winding coil wired to a stator in independent and parallel manner, a rotor having multiple permanent magnets, and a coil wound in parallel according to the pole of the rotor. The DC motor comprises: a hollow stator having multiple coil wiring portions such that same can be wired in a multi-phase manner; a rotor disposed in the hollow portion of the stator, the rotor having a shaft provided at the center portion thereof, and the rotor being provided such that multiple permanent magnets can be inserted therein, thereby having multiple poles; a coil portion connected to each of the multiple poles and provided in parallel; and an encoder module connected to be spaced apart from the rotor and configured such that the direction in which an electric current is supplied is changed according to the poles of the rotor. In addition, the coil portion ensures that a uniform magnetic force is applied to each of the poles of the rotor, which are connected in parallel, such that the rotor can be rotated while minimizing noise and vibration. In addition, the present invention is advantageous in that the multiple coils are connected in parallel to each other, and the coils and the poles of the rotor are connected in parallel again such that a uniform magnetic field corresponds to one pole, thereby improving the torque of the motor.

## Description

### [Technical Field]

The present invention relates to a DC motor having a multi-phase armature winding coil wired to a stator in an independent and parallel manner, a rotor having multiple permanent magnets, and coils wound in parallel according to a pole of the rotor, and more particularly, to a DC motor having a multi-phase armature winding coil wired to a stator in an independent and parallel manner, a rotor having multiple permanent magnets, and coils wound in parallel according to a pole of the rotor using coils wired in parallel and wound in a parallel-parallel manner according to each phase and the pole of the rotor.

### [Background Art]

In general, a brushless DC motor is a type of motor in which a voltage is applied from a DC power source via an inverter to an armature winding of a three-phase synchronous motor. This brushless DC motor may perform a reverse operation and regenerative braking without changing connection of a main circuit and is mainly used in a driving environment required at acceleration and deceleration. However, in a brushless DC motor according to the related art, opposite ends of a coil bundle do not correspond to only one pole of a rotor, a magnetic force according to the number of windings of the coil is divided according to the pole, and thus torque of the motor is reduced. Further, when a plurality of coils are wound in series, different resistance values are applied to the respective coils, and thus different magnetic fields are generated, and heat generation and vibration are caused.

As the related art document for solving the problem of the motor according to the related art, Korean Patent No. 10-0947172 discloses a generator-integrated permanent magnet motor which includes a plurality of permanent magnet rotors, a ratchet, and a power generation coil and in which a repulsive force is applied in multiple directions depending on a pole.

However, even in the related art, it is difficult to maximize the generation of a magnetic field generated in a coil of a stator corresponding to a magnetic field of the rotor.

### [Detailed Description of Invention]

### [Technical Problem]

The present invention is devised to solve the problem of the related art, and an object thereof is to improve torque and a rotational speed of a motor to correspond to coils wound in parallel according to respective phases and poles of a rotor.

### [Technical Solution]

According to an embodiment of the present invention, a DC motor having a multi-phase armature winding coil wired to a stator in an independent and parallel manner, a rotor having multiple permanent magnets, and coils wound in parallel according to a pole of the rotor includes a hollow stator which is provided with a plurality of coil wired parts to be wired in multiple phases, a rotor which is disposed in a hollow portion of the stator and has a shaft provided at a center thereof, into which a plurality of permanent magnets are inserted, and which has a plurality of poles, a coil part connected to the plurality of poles and provided in parallel, and an encoder module which is connected to be spaced apart from the rotor and changes a supply direction of current according to the poles of the rotor. Further, the coil part allows a uniform magnetic force to be applied to the poles of the rotor connected in parallel so that the rotor rotates while noise and vibration are minimized.

### [Advantageous Effects]

By the means for solving the problem, the present invention has an effect of improving torque of a motor by connecting a plurality of coils in parallel and further connecting the coils and poles of a rotor in parallel such that a uniform magnetic field corresponds to a single pole.

Further, the present invention has an effect of minimizing heat generation, vibration, and noise generated when the motor is driven by allowing a uniform magnetic field to correspond to the poles of the rotor through the coils connected in parallel.

### [Description of Drawings]

FIG. 1 is a schematic diagram of coils connected in series in a motor according to the related art.
FIG. 2 is a schematic diagram illustrating a state in which the coils connected in series in the motor according to the related art are connected in parallel according to polarity of a rotor.
FIG. 3 is a schematic diagram illustrating a state in which a coil part is wired in parallel to a stator of a DC motor according to a first embodiment of the present invention and a rotor having a plurality of polarities is disposed inside the stator.

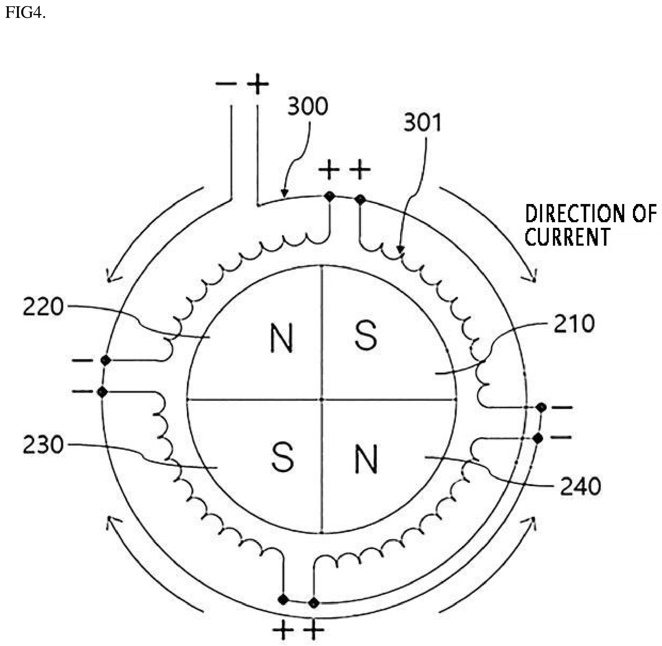

FIG. 4 is a schematic diagram illustrating a state in which the rotor having the plurality of polarities and the coil part corresponding to the rotor are arranged in parallel in the DC motor according to the first embodiment of the present invention.
FIG. 5 is a schematic diagram illustrating the rotor into which permanent magnets are inserted and an encoder module connected to a shaft according to the first embodiment of the present invention.
FIG. 6 is a view illustrating a state in which the permanent magnets are radially inserted into the rotor according to the first embodiment of the present invention and a non-magnetic shielding member is stacked in an air gap.
FIG. 7 is a view illustrating a magnetic field formed by the permanent magnets of the rotor according to the first embodiment of the present invention.
FIG. 8 is a view illustrating a state in which a magnetic field area formed by the permanent magnets is formed inside the rotor of the motor according to the related art.
FIG. 9 is a view illustrating a state in which the magnetic field formed by the permanent magnets of the rotor is largely formed toward an outer stator side of the rotor by the shielding member according to the first embodiment of the present invention.
FIG. 10 is an enlarged view illustrating widths of an air gap and a pore of the rotor and the stator in detail according to the first embodiment of the present invention.
FIG. 11 is a schematic diagram illustrating the coil part provided in three phases according to the first embodiment of the present invention.
FIG. 12 is a view illustrating an encoder board, an encoder wheel, and sensing units of the encoder module according to the first embodiment of the present invention.
FIG. 13 is a schematic diagram illustrating the encoder wheel, a range of a sensing area part, and arrangement of the sensing units according to the first embodiment of the present invention.
FIG. 14 is a schematic diagram illustrating a state in which an H-bridge circuit of the encoder module is connected to the sensing units according to the first embodiment of the present invention.
FIG. 15 is a view illustrating a state in which signals of the sensing units are transmitted to the H-bridge circuit and a direction of current flowing in the coil part is controlled according to the first embodiment of the present invention.

### [Modes of the Invention]

Terms used in the specification will be briefly described, and the present invention will be described in detail.

Although general terms currently widely used are selected as often as possible as the terms used in the present invention in consideration of functions in the present invention, the terms may be changed depending on the intention of those skilled in the art, a precedent, an emergence of new technologies, etc. Thus, the terms used in the present invention should be defined based not on the name of the terms but on the meaning of the terms and the overall content of the present invention.

Throughout the specification, when a first component "includes" a second component, this means that a third component is not excluded but may be further included unless otherwise specifically stated.

Hereinafter, embodiments of the present invention will be described in detail with reference to the accompanying drawings so that those skilled in the art to which the present invention pertains may easily implement the present invention. However, the present invention may be implemented in various different forms and is not limited to the embodiments described herein.

Specific details including a problem to be solved by the present invention, a means for solving the problem, and effects of the invention are included in embodiments and drawings to be described below. Advantages and features of the present invention and a method of achieving the advantages and the features will become apparent with reference to the embodiments described below in detail in conjunction with the accompanying drawings.

Hereinafter, a DC motor having a multi-phase armature winding coil wired to a stator in an independent and parallel manner, a rotor having multiple permanent magnets, and coils wound in parallel according to a pole of the rotor according to the present invention will be described in detail with reference to the accompanying drawings.

The DC motor having a multi-phase armature winding coil wired to a stator in an independent and parallel manner, a rotor having multiple permanent magnets, and coils wound in parallel according to a pole of the rotor according to a first embodiment of the present invention includes a hollow stator 100 which is provided with a plurality of coil wired parts 110 to be wired in multiple phases, a rotor 200 which is disposed in a hollow portion of the stator 100 and has a shaft 205 provided at a center thereof, into which a plurality of permanent magnets 201 are inserted, and which has a plurality of poles, a coil part 300 wired to the coil wired parts 110 to correspond to the poles of the rotor 200 in parallel, and an encoder module 400 which is connected to be spaced apart from the rotor 200 and changes a supply direction of current according to the poles of the rotor 200. Further, the coil part 300 may allow a uniform magnetic force to be applied to the poles of the rotor 200, and thus the rotor 200 may rotate while noise and vibration are minimized.

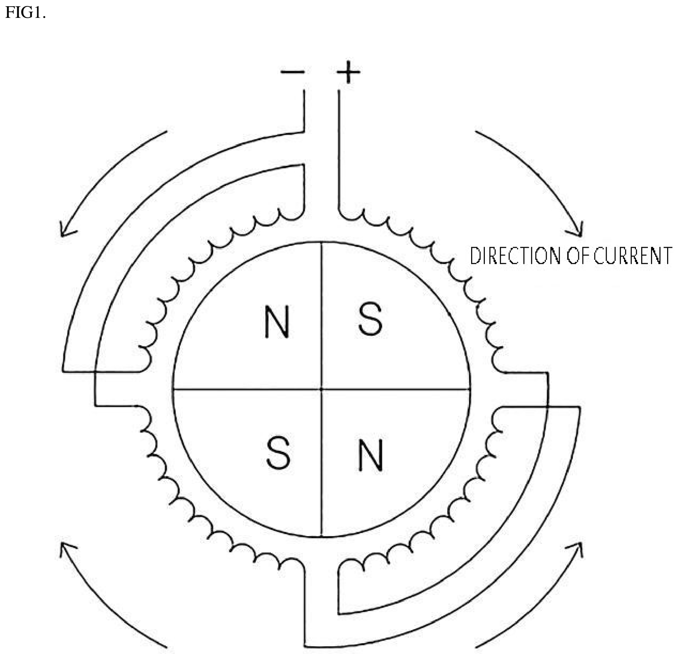

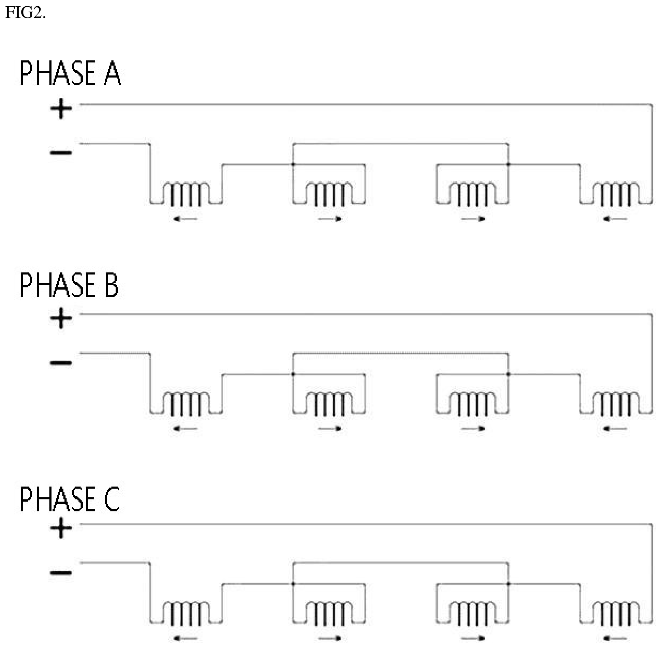

**In** more detail, the present invention relates to a brushless DC motor using the permanent magnets 201 inserted into the rotor 200, in which a plurality of coils provided in the coil part 300 are connected in parallel to the poles of the rotor 200, and the coils of the coil part 300 are connected in parallel to each other and thus are parallel-parallel wound. That is, in the brushless DC motor having multiple phases, the uniform magnetic force may be applied in a state in which each of the coils may correspond to one of the poles, and thus vibration of the motor may be minimized, and higher torque may be output from a motor having the same specification. As illustrated in FIG. 1, in the motor according to the related art, the respective coils in contact with the poles of the rotor are connected to each other in series, the coil is wound such that a start end and a terminal end thereof correspond to only one pole, and thus it is difficult to apply the uniform magnetic force to the rotor. Further, as illustrated in FIG. 2, when the coils are connected to each other in series, a resistance value of the coil disposed at a last fourth position may be four times or more that of a first coil. The present invention has been devised to solve a problem caused by the coils connected in series.

As an example, the stator 100 may be provided in a hollow shape so that the rotor 200 may be inserted thereinto. Further, an inner circumferential surface of the stator 100 and an outer circumferential surface of the rotor 200 are provided to be spaced apart from each other, and a gap therebetween is referred to as an air gap G. Further, the stator 100 allows the coil part 300 to be wired thereto so that a magnetic field may be generated in the stator 100 and a magnetic force may be provided to the rotor 200. That is, when a magnetic force generated in the stator 100 has the same polarity as the rotor 200, a repulsive force due to the magnetic force may be continuously generated, thereby allowing the rotor 200 to rotate. As an example, the stator 100 is provided with the coil wired part 110 having a donut-shaped cross section and provided such that the coil part may be wired to the inner circumferential surface thereof. The coil wired part 110 is disposed radially with respect to a center of the stator 100 and has a narrow entrance side and an accommodation space formed therein so that the coil part 300 may be easily wired. That is, the coil part 300 is connected parallel to each of the plurality of coil wired parts 110 arranged radially so that a magnetic field may be generated from the inner circumferential surface of the stator 100 toward an inner side on which the rotor 200 is disposed. In the present embodiment, description is made based on a four-pole three-phase brushless motor. Thus, in the present embodiment, 12 coil wired parts 110 may be provided, and three coil wired parts 110 may be arranged in each quadrant of the rotor 200. Further, the coil wired parts 110 may be provided at uniform spacing distances and formation angles so that the magnetic force applied to the rotor 200 may be made uniform.

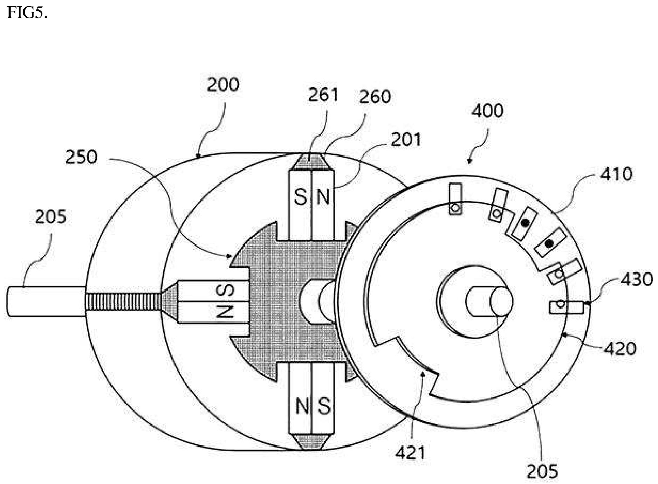

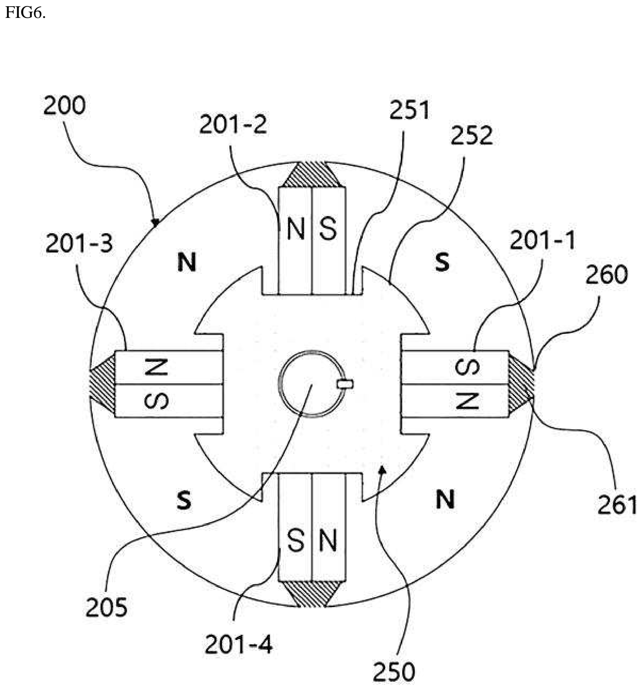

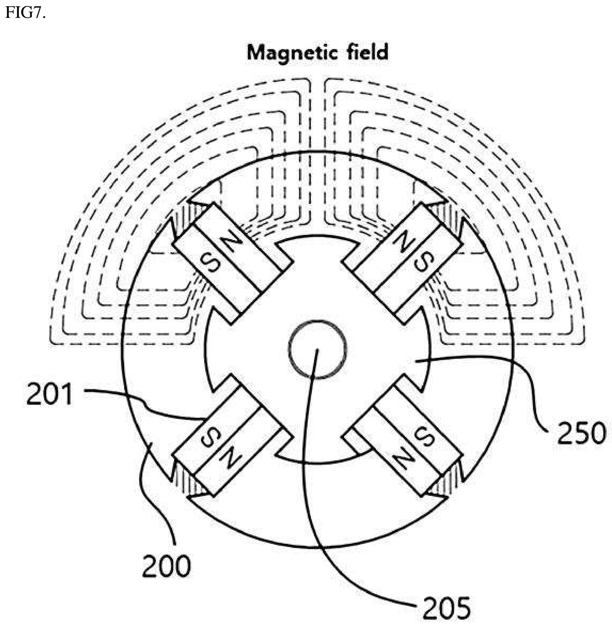

Further, the rotor 200 may be rotated by repulsion from the magnetic force generated by the coil part 300 wired to the stator 100. In this case, the shaft 205 corresponding to a rotary shaft of the motor is provided at the center of the rotor 200. Further, the shaft 205 is simultaneously connected to the rotor 200 and the encoder module 400 and serves as a rotary shaft of the rotor 200 and the encoder module 400. Further, the rotor 200 has the plurality of permanent magnets 201 inserted thereinto and thus has polarity. In more detail, the rotor 200 includes the plurality of permanent magnets 201 radially inserted into the rotor 200, a central member 250 provided at a center of the rotor 200 and in contact with the permanent magnets 201 inserted into the rotor 200, an air gap 260 provided such that an empty space is formed in end portions of the permanent magnets 201 inserted into the rotor 200, and a shielding member 260 stacked in the air gap 260 and made of a non-magnetic material. Further, the air gap 260 and the shielding member 261 may allow a magnetic field area of the permanent magnets 201 to extend to an outer space of the rotor 200 so that magnetic forces of the permanent magnets 201 and the coil part 300 strongly repel each other. In this case, in the present embodiment, since the rotor 200 has four poles, the four permanent magnets 201 may also be provided. Further, referring to FIGS. 5 and 6, as the four permanent magnets 201 are radially arranged based on a cross section of the rotor 200, the permanent magnets 201 may be arranged in a cross shape. In this case, the permanent magnets 201 include a first permanent magnet 201-1, a second permanent magnet 201-2, a third permanent magnet 201-3, and a fourth permanent magnet 201-4 respectively inserted into a right side, an upper side, a left side, and a lower side of the rotor 200. Further, the permanent magnets 201 are arranged such that the same polarities of the permanent magnets 201 arranged adjacent to each other face each other. For example, S poles of the first permanent magnet 201-1, the second permanent magnet 201-2, the third permanent magnet 201-3, and the fourth permanent magnet 201-4 are arranged to face each other. Further, N poles of the first permanent magnet 201-1, the second permanent magnet 201-4, the third permanent magnet 201-2, and the fourth permanent magnet 201-3 are arranged to face each other. As a result, as illustrated in FIG. 7, a magnetic field generated from the permanent magnets 201 may be applied in a loop shape. Further, due to the arrangement of the permanent magnets 201, the rotor 200 may be provided such that polarities of four quadrants thereof cross with each other. Further, since torque generated by the magnetic force of the rotor 200 is proportional to the number of poles provided on the rotor 200, a plurality of poles may be provided according to selection without departing from the scope of the present invention. However, to describe the present invention, as in the present embodiment, an example of the rotor 200 having four poles will be described. The rotor 200 includes a first pole 210 provided at a position corresponding to a first quadrant, a second pole 220 provided at a position corresponding to a second quadrant, a third pole 230 provided at a position corresponding to a third quadrant, and a fourth pole 240 provided at a position corresponding to a fourth quadrant, based on one surface divided into four quadrants. In this case, the first pole 210 and the third pole 230 are S poles, and the second pole 220 and the fourth pole 240 are N poles. Further, the rotor 200 may rotate as the first pole 210, the second pole 220, the third pole 230, and the fourth pole 240 receive a repulsive force due to the magnetic force generated by the coil part 300.

Further, the central member 250 is provided at a core of the rotor 200 so that the permanent magnets 201 are stably seated and serves to prevent the magnetic field generated by the permanent magnets 201 from being transmitted to the shaft 205. In more detail, the central member 250 is formed of a non-magnetic metal, is provided to surround the shaft 205, and shields the shaft 205 such that the magnetic field generated by the permanent magnets 201 is prevented from being transmitted to the shaft 205. The non-magnetic metal may include a material such as stainless steel. Further, the central member 250 is provided in a quadrangular shape and formed at a central portion of the rotor 200 in a longitudinal direction. In this case, as in the present embodiment, when the rotor 200 has a greater number of poles, such as six poles or eight poles instead of four poles, the central member 250 is configured such that the number of sides thereof is set according to the number of poles. That is, when the six permanent magnets 201 are radially inserted into the rotor 200, the central member 250 may be provided in a hexagonal shape. Further, a seating portion 251 in contact with the permanent magnet 201 is provided on each surface of the central member 250. Further, a dovetail portion 252 is provided at each corner of the central member 250. The dovetail portion 252 is formed so that the central member 250 may be coupled to the rotor 200 in a fitting manner. As an example, the dovetail portion 252 is provided in a fan shape form protruding outward from an edge of the seating portion 251. That is, the dovetail portion 252 is provided at each of four corners of the central member 250 and allows the central member 250 to be firmly coupled to the rotor 200. Accordingly, even when the rotor 200 rotates at a high speed, the central member 250 may not be shaken or separated so as not to cause vibration and may rotate integrally with the rotor 200.

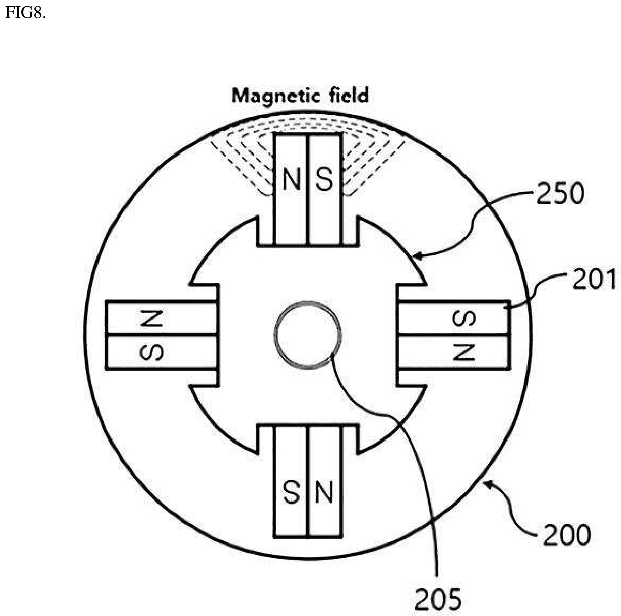

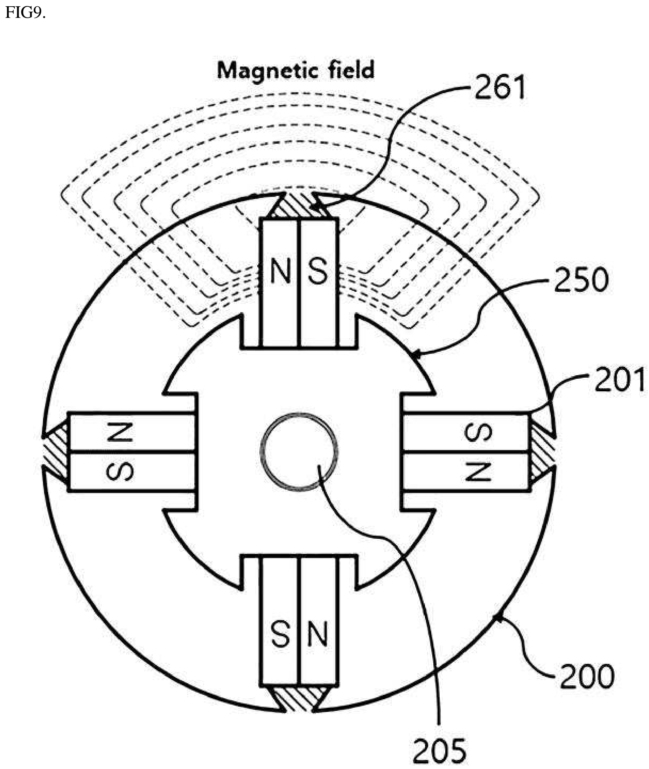

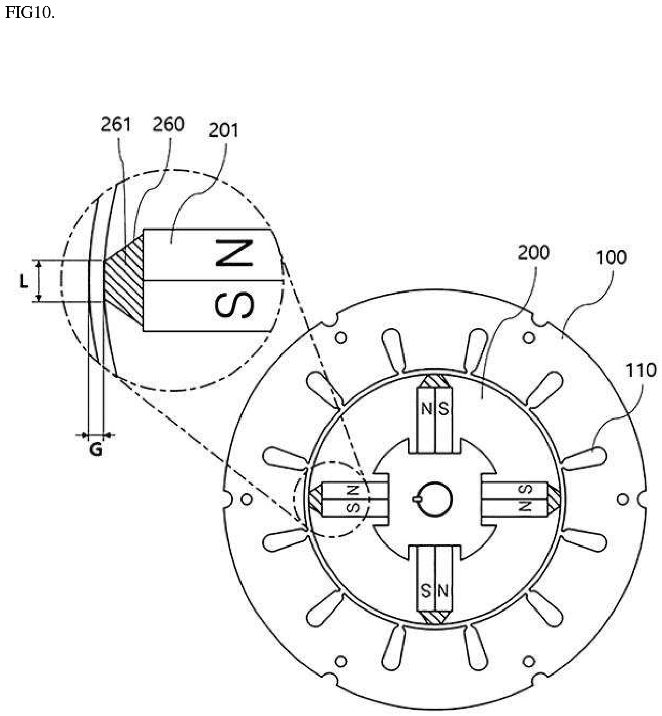

Further, the air gap 260 is formed such that an empty space is provided between the permanent magnets 201 and the outer circumferential surface of the rotor 200. In more detail, the air gap 260 is formed to be narrower than a width of the permanent magnet 201 to prevent the permanent magnet 201 inserted into the rotor 200 from being separated to the outside due to a centrifugal force according to the rotation of the rotor 200. Further, the air gap 260 is formed to have a shape of which a width gradually decreases from an inner side toward the outer circumferential surface of the rotor 200. That is, the air gap 260 is provided such that a dovetail-shaped accommodation space having a trapezoidal shape is formed in a longitudinal direction of the rotor 200. Further, the air gap 260 has an empty space formed in one side of the conductive rotor 200 and thus serves to close a magnetic flux path of the magnetic field generated by the permanent magnets 201. As an example, as illustrated in FIG. 8, in the motor according to the related art in which the air gap 260 is not provided, a magnetic flux path may be formed between the permanent magnet and the rotor, and thus the magnetic field may be intensively distributed in the space inside the rotor. As a result, a repulsive force between the magnetic field generated from the coil part 300 wired to the stator 100 and the magnetic field generated from the rotor is weakly applied, and thus torque of the motor may be reduced. In contrast, referring to FIG. 9, when the air gap 260 is provided as in the present embodiment, the magnetic field area generated by the permanent magnets 201 is distributed to extend to an area outside the outer circumferential surface of the rotor 200, and thus a repulsive force with the magnetic field generated from the coil part 300 may become stronger. That is, the air gap 260 guides the magnetic flux path formed by the permanent magnets 201 to be closer to the stator 100, and thus the torque of the motor may be increased. In this case, referring to FIG. 10, an inlet-side width L of the air gap 260 may be formed to be greater than the air gap G between the rotor 200 and the stator 100. When the air gap width L is smaller than the air gap G, the magnetic field generated by the permanent magnet 201 is not induced close to the stator 100, and thus an increase in a repulsive force due to the magnetic field may be reduced. Further, the shielding member 261 serves to prevent noise and vibration that may be generated during high-speed rotation of the rotor 200 due to an empty space formed by the air gap 260. Further, the shielding member 261 serves to fix the permanent magnets 201 inserted into the rotor 200 so that the permanent magnets 201 are not separated to the outside due to a centrifugal force according to the high-speed rotation. Further, the shielding member 261 may have one surface adjacent to the stator 100, which is formed to have the same radius of curvature as the outer circumferential surface of the rotor 200, and thus a drag force applied during the rotation of the rotor 200 may be minimized.

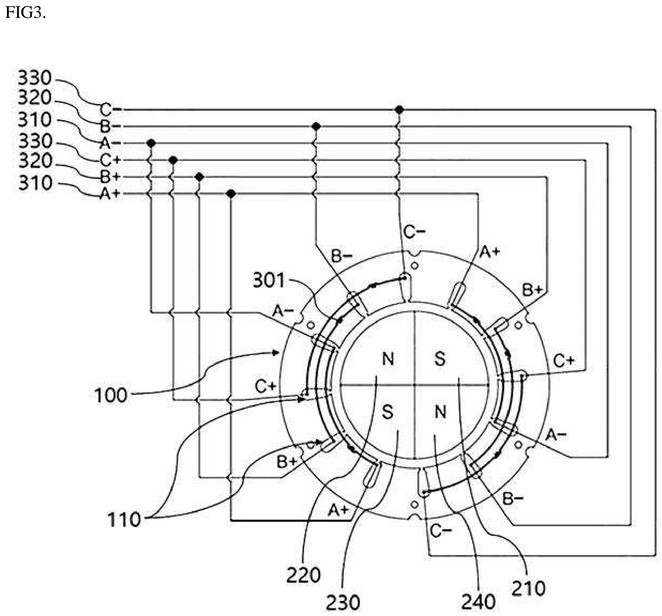

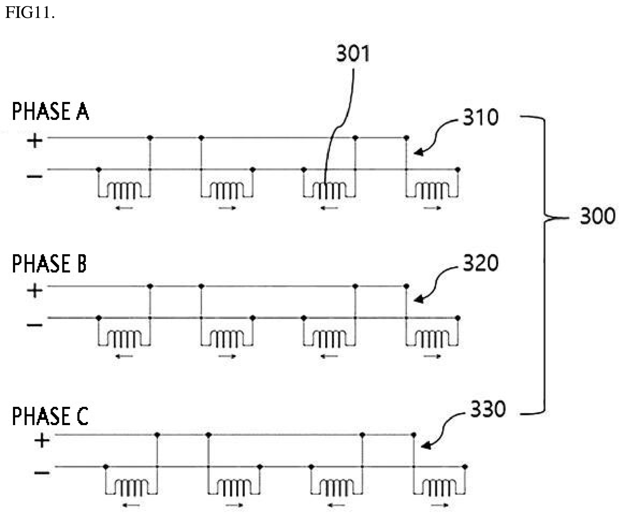

Further, the coil part 300 includes a plurality of coil bundles 301 that are connected to each other in parallel. Further, the coil bundles 301 are connected in parallel to the poles of the rotor 200. In particular, the coil bundles 301 are provided with the same number of turns and have the same resistance value, and thus a uniform magnetic force may be applied to the poles of the rotor 200. In more detail, the coil part 300 is provided in multiple phases, and the multiple phases are wired in parallel for each phase and also wired to the poles of the rotor 200 in parallel. That is, the coil bundles 301 of the coil part 300 are provided with the same number of turns and have the same resistance value, and thus the magnetic force applied to the poles of the rotor 200 is uniform. In this case, as described in the rotor 200, the coil part 300 may be provided in a plurality of phases without departing from the embodiment of the present invention, but for the purpose of describing the present invention, the coil part 300 will be described as being provided in three phases. As an example, referring to FIG. 11, the coil part 300 includes a first coil portion 310 defined as a phase A, a second coil portion 320 defined as a phase B, and a third coil portion 330 defined as a phase C. The first coil portion 310, the second coil portion 320, and the third coil portion 330 that constitute the respective phases are provided with the coil bundles 301 according to the number of poles such that the coil bundles 301 may correspond to the first pole 210, the second pole 220, the third pole 230, and the fourth pole 240 provided on the rotor 200. That is, the first coil portion 310, the second coil portion 320, and the third coil portion 330 are provided with the four coil bundles 301. Further, the coil bundles 301 are connected to each other in parallel. Further, the plurality of coil bundles 301 are provided in the same number of turns but in different winding directions. For example, a first coil bundle 301 and a third coil bundle 301 from a left side of the coil part 300 are wound such that current is directed toward the left side, and a second coil bundle 301 and a fourth coil bundle 301 are wound such that current is directed toward the left side. That is, the coil part 300 is configured such that the coil bundles 301 are connected to each other in parallel and a winding direction of adjacent coil bundles 301 is opposite to the direction of current. When the plurality of coil bundles 301 provided in the coil part 300 and connected in parallel are further connected in parallel according to the poles of the rotor 200, torque applied to each of the poles of the rotor 200 becomes uniform, and thus noise and vibration generated when the motor is driven may be minimized. Further, a time during which electricity is energized to each of the coil bundles 301 may be uniform, a rotation displacement detection interval of the rotor 200 according to the encoder module 400 which will be described below may be reduced, and thus a time during which electricity is energized to the coil part 300 may be adjusted to be shortened or lengthened. Further, an example in which the coil part 300 is connected to the rotor 200 in parallel will be described with reference to FIG. 3. A positive pole of the first coil portion 310 corresponding to the phase A is connected to the first pole 210 and the third pole 230, and a negative pole thereof is connected to the second pole 220 and the fourth pole 240. In this case, in the first coil portion 310, the positive pole connected to the first pole 210 and the negative pole connected to the fourth pole 240 are connected to the rotor 200 in a pair, and the positive pole connected to the third pole 230 and the negative pole connected to the second pole 220 are connected to the rotor 200 in a pair. Further, a positive pole of the second coil portion 320 corresponding to the phase B is connected to the first pole 210 and the third pole 230, and a negative pole thereof is connected to the second pole 220 and the fourth pole 240. In this case, in the second coil portion 320, the positive pole connected to the first pole 210 and the negative pole connected to the fourth pole 240 are connected to the rotor 200 in a pair, and the positive pole connected to the third pole 230 and the negative pole connected to the second pole 220 are connected to the rotor 200 in a pair. Further, a positive pole of the third coil portion 330 corresponding to the phase C is connected to the first pole 210 and the third pole 230, and a negative pole thereof is connected to the second pole 220 and the fourth pole 240. In this case, in the third coil portion 330, the positive pole connected to the first pole 210 and the negative pole connected to the fourth pole 240 are connected to the rotor 200 in a pair, and the positive pole connected to the third pole 230 and the negative pole connected to the second pole 220 are connected to the rotor 200 in a pair. Further, the coil bundles 301 of the first coil portion 310, the second coil portion 320, and the third coil portion 330 are provided to be sequentially connected to the rotor 200 in an order from the coil bundle 301 of the first coil portion 310 to the coil bundle 301 of the third coil portion 330.

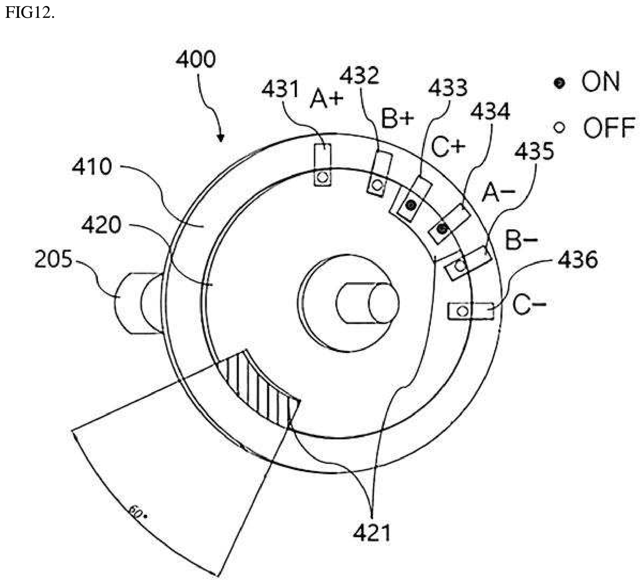

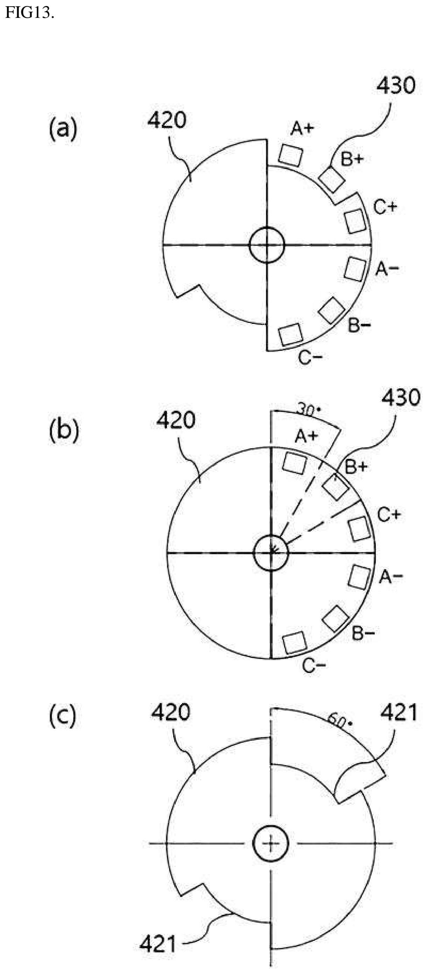

Next, referring to FIGS. 12 to 15, the encoder module 400 is connected to the shaft 205 protruding upward from a central portion of the rotor 200. Further, the encoder module 400 detects rotational displacement of the rotor 200 and allows a reference to be set such that a current applied to the coil part 300 may be adjusted. As an example, the encoder module 400 includes a circular encoder board 410 that is fixed in place while fastened to the shaft 205, an encoder wheel 420 disposed on one surface of the encoder board 410 and connected to the shaft 205 so as to rotate, and a sensing unit 430 installed on the encoder board 410, provided such that one side thereof is seated on one surface of the encoder wheel 420, and configured to detect rotational displacement of the poles. The encoder board 410 may allow a signal detected by the sensing unit 430 to be transmitted to the coil part 300. In this case, the coil part 300 may allow electricity energized in the first coil portion 310, the second coil portion 320, the third coil portion 330, and the coil bundles 301 to be adjusted according to the signal received from the sensing unit 430. Further, the encoder wheel 420 may rotate together on the encoder board 410 according to the rotation of the rotor 200. That is, the encoder board 410 and the sensing unit 430 may remain in a stationary state, and only the encoder wheel 420 may be fixed to the shaft 205 connected to the rotor 200 and rotate together. Further, the sensing unit 430 includes a plurality of commutation sensor groups 431, 432, 433, 434, 435, and 436 provided to correspond to the respective phases of the coil part 300. In the present invention, since the coil part 300 is described as being defined in the three phases, the sensing unit 430 includes the six commutation sensor groups 431, 432, 433, 434, 435, and 436 according to the number of phases of the coil part 300. When the coil part 300 is provided in four phases, it is obvious that the sensing unit 430 includes eight commutation sensor groups. That is, the sensing unit 430 includes two commutation sensors corresponding to each phase of the coil part 300. Further, the sensing unit 430 is provided such that one side thereof is spaced apart from one surface of the encoder board 410 while connected to the one surface of the encoder board 410. Further, the rotational displacement of the rotor 200 may be detected through a portion of the sensing unit 430, which is spaced apart from the one surface of the encoder board 410. In this case, the encoder wheel 420 is provided such that one surface corresponding to an edge thereof is disposed between the sensing unit 430 and the encoder board 410. Further, the encoder wheel 420 includes a sensing area portion 421 provided such that both sides of the encoder wheel 420 are recessed. Further, when the encoder wheel 420 rotates so that the sensing area portion 421 becomes adjacent to the sensing unit 430, the sensing area portion 421 may allow the sensing unit 430 to detect the rotational displacement of the pole. As an example, referring to FIGS. 12 and 13, the sensing area portion 421 is recessed symmetrically with respect to a centrifugal center of the encoder board 410. Further, when the sensing area portion 421 becomes adjacent to the sensing unit 430 according to the rotation of the encoder wheel 420, the commutation sensor groups 433 and 434 corresponding to the sensing area portion 421 among the commutation sensor groups 431, 432, 433, 434, 435, and 436 of the sensing unit 430 may be operated, and the rotational displacement of the pole of the rotor 200 may be detected. In this case, among the commutation sensor groups 431, 432, 433, 434, 435, and 436 of the sensing unit 430, the commutation sensor groups 431, 432, 435, and 436 not corresponding to the sensing area portion 421 may remain in an off state. Further, among the commutation sensor groups 431, 432, 433, 434, 435, and 436 of the sensing unit 430, the commutation sensor groups 433 and 434 corresponding to the sensing area portion 421 may allow a signal to be transmitted to the coil part 300 and thus a magnetic field corresponding to the rotational displacement of the rotor 200 is generated in the coil part 300. Further, according to a preset range of the sensing area portion 421, a time during which electricity is energized to the coil part 300 according to detection of the rotational displacement of the rotor 200 may be decreased or increased. In this case, the sensing unit 430 may be provided as one of a sensor for sensing magnetism and a sensor for sensing light. When the sensing unit 430 is provided as the sensor for sensing magnetism, a magnet having a magnetic field may be attached to the sensing area portion 421 of the encoder wheel 420 so that a signal sensing area may be formed. Further, when the sensing unit 430 is provided as the sensor for sensing light, light is detected by a sensor group corresponding to the sensing area portion 421 so that an ON signal is generated, and light is blocked by the encoder wheel 420 at a sensor group corresponding to an area other than the sensing area portion 421 so that an OFF signal is generated. Further, the sensor groups 431, 432, 433, 434, 435, and 436 may be arranged at an angle of 30 degrees with respect to an axis of the shaft 205, the sensing area portion 421 may be provided at an angle of 60 degrees, and thus the sensor groups 431, 432, 433, 434, 435, and 436 may sequentially generate signals.

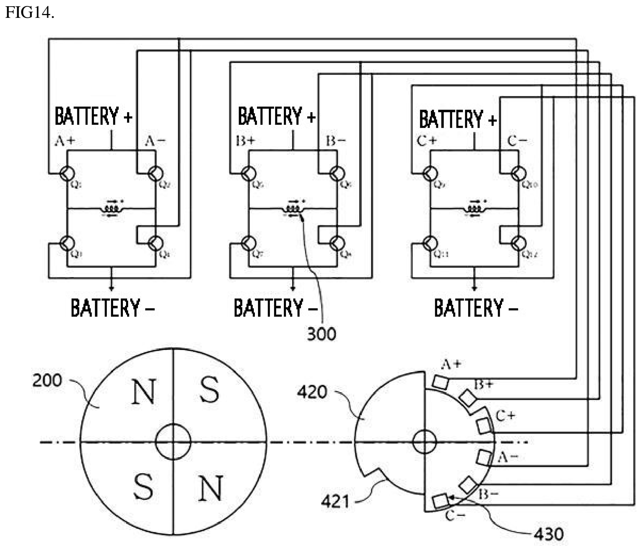

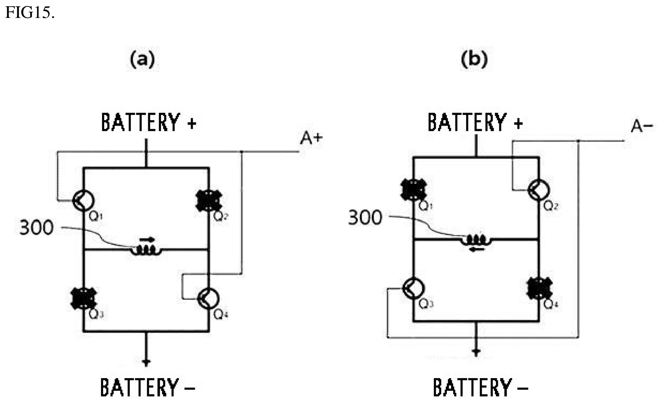

Further, referring to FIGS. 14 and 15, the encoder module 400 is provided in the form of an H-bridge circuit. As an example, when the sensor group 431 corresponding to a phase A+ among the sensor groups 431, 432, 433, 434, 435, and 436 transmits a signal, a current is transmitted to switches Q1 and Q4 as illustrated in FIG. 15A such that the current flows from the left side to the right side. In contrast, when the sensor group 434 corresponding to a phase A- among the sensor groups 431, 432, 433, 434, 435, and 436 transmits a signal, a current is transmitted to switches Q2 and Q3 as illustrated in FIG. 15B such that the current flows from the right side to the left side. In this case, as a direction of current flowing through each coil bundle 301 of the coil part 300 is set, a magnetic force applied is controlled according to the rotational displacement and the polarity of the rotor 200.

Embodiments described above should be understood as illustrative and not restrictive in all aspects, and the scope of the present invention is represented by the appended claims, which will be described below, rather than the detailed description. Accordingly, all changes or modifications derived from the meaning and scope of the appended claims and equivalents thereto should be interpreted as being included within the scope of the present invention.

### [Description of Reference Numerals]

100: Stator
110: Coil wired part
120: Fixing bolt
130: Cover part
200: Rotor
201: Permanent magnet
201-1: First permanent magnet
201-2: Second permanent magnet
201-3: Third permanent magnet
201-4: Fourth permanent magnet
205: Shaft
210: First pole
220: Second pole
230: Third pole
240: Fourth pole
250: Central member
251: Seating portion
252: Dovetail portion
260: Air gap
261: Shielding member
300: Coil part
301: Coil bundle
310: First coil portion
320: Second coil portion
330: Third coil portion
400: Encoder module
410: Encoder board
420: Encoder wheel
421: Sensing area portion
430: Sensing unit
431, 432, 433, 434, 435, 436: Sensor group
Air gap: G
Air gap width: L

## Claims

1. A DC motor having a multi-phase armature winding coil wired to a stator (100) in an independent and parallel manner, a rotor (200) having multiple permanent magnets (201), and coils wound in parallel according to a pole of the rotor (200), the DC motor comprising:
a hollow stator (100) which is provided with a plurality of coil wired parts (110) to be wired in multiple phases;
a rotor (200) which is disposed in a hollow portion of the stator (100) and has a shaft (205) provided at a center thereof, into which a plurality of permanent magnets (201) are inserted, and which has a plurality of poles;
a coil part (300) wired to the coil wired parts (110) to correspond to the poles of the rotor (200) in parallel; and
an encoder module (400) which is connected to be spaced apart from the rotor (200) and changes a supply direction of current according to the poles of the rotor (200),
wherein the coil part (300) allows a uniform magnetic force to be applied to the poles of the rotor (200) so that the rotor (200) rotates while noise and vibration are minimized.

2. The DC motor of claim 1, wherein the rotor (200) includes a central member (250) provided at a center of the rotor (200) and disposed in contact with the permanent magnet (201) inserted into the rotor (200), and
the central member (250) is formed of a non-magnetic material and prevents a magnetic field of the permanent magnet (201) from flowing to the shaft (205).

3. The DC motor of claim 1, wherein the rotor (200) includes:
an air gap (260) provided such that an empty space is formed in an end portion of the permanent magnet (201) inserted into the rotor (200); and
a shielding member (261) stacked in the air gap (260) and made of a non-magnetic material, and
the air gap (260) and the shielding member (261) allow a magnetic field area of the permanent magnet (201) to extend to an outer space of the rotor (200) so that magnetic forces of the permanent magnet (201) and the coil part (300) strongly repel each other.

4. The DC motor of claim 1, wherein the coil part (200) includes a plurality of coil bundles (301) which are connected to each other in parallel, and
the coil bundles (301) are connected to the poles of the rotor (200) in parallel.

5. The DC motor of claim 4, wherein the coil bundles (301) are provided with the same number of turns and have the same resistance value so that a uniform magnetic force is applied to the poles of the rotor (200).

6. The DC motor of claim 1, wherein the encoder module (400) includes:
a circular encoder board 410 that is fixed in place while fastened to the shaft (205);
an encoder wheel (420) disposed on one surface of the encoder board (410) and connected to the shaft (205) to rotate; and
a sensing unit (430) installed on the encoder board (410), provided such that one side thereof is seated on one surface of the encoder wheel (420), and configured to detect rotational displacement of the poles.

7. The DC motor of claim 6, wherein the encoder wheel (420) includes sensing area portions (421) provided by recessing opposite sides of the encoder wheel (420) with respect to a centrifugal center of the encoder board (410), and
when the encoder wheel (420) rotates and the sensing area portion (421) is adjacent to the sensing unit (430), the rotational displacement of the poles is detected by the sensing unit (430).
